# EUROPEAN PATENT APPLICATION

(11) **EP 1 995 670 A2**
(43) Date of publication of application: **26.11.2008**
(21) Application number: 08156717.4
(22) Date of filing: 22.05.2008
(51) Int. Cl.: G06F 17/30

(54) **Image linkage tuition device**

(30) Priority: 25.05.2007 KR 20070050836
(71) Applicant: Earzone Co., Ltd, Seoul (KR)
(72) Inventor: Lee, Kang-seok, Seoul (KR)
(74) Representative: Walaski, Jan Filip

(57) **Abstract**

The image linking tuition device according an exemplary embodiment of the present invention comprises an educational data control unit displaying an image scanned from a scanning device, and linking the image to educational data and storing the educational data linked to the image therein, and searching and outputting the educational data linked to the image; a web service unit converting the educational data generated from the educational data control unit and providing a web distribution service; and the database storing the educational data generated from the educational data control unit and the web document generated from the web service.

## Description

The present invention relates to a tuition device that is capable of performing education using an image, more specifically to an image linkage tuition device for education that is capable of scanning an image, linking the scanned image to educational data, storing the educational content linked to the image, and outputting the educational data linked to the image when the image is read.

Recently, IT technologies have been introduced to various tuitional methods to permit huge number of diverse materials to be freely utilized during an actual class. A typical example of such tuitional methods includes an on-line lecture provided over the Internet, a learning method using content such as slides, and other educational schemes using multimedia data.

However, conventional on-line tuitional methods have shortcomings that content is previously created by the huge amount of capital and the materials are impossible to edit, which makes it difficult for tutors to create some materials suitable for tuitional conditions.

Tuitional methods using a slide require tutors to previously collect materials such as images and other educational data, and process and edit the materials using a document creation software program such as Powerpoint^{™}. Therefore, tutors needed to learn to how to use the document creation software program, and those unskilled to edit documents felt huge difficulty in generating materials for tuition.

The present invention has been designed to overcome the above problems, and an aspect of the present invention is to provide an image linkage tuition device for education that is capable of scanning an image by an image scanning device, linking the scanned image to content data, storing the image linked to the content data, and outputting the content data linked to the image when the image is read. The image linkage tuition device of the present invention may permit tutors to easily create educational data and convert the created educational data into documents for web to be readily distributed over the Internet.

According to an aspect of the present invention, there is provided an image linking tuition device including an educational data control unit displaying an image scanned from a scanning device, and linking the image to educational data and storing the educational data linked to the image therein, and searching and outputting the educational data linked to the image; a web service unit converting the educational data generated from the educational data control unit and providing a web distribution service; and the database storing the educational data generated from the educational data control unit and the web document generated from the web service.

According to another aspect of the present invention, there is provided an image linking tuition device including an educational data control unit displaying an image scanned from a scanning device, and linking the image to educational data and storing the educational data linked to the image therein, and searching and outputting the educational data linked to the image; a web service unit converting the educational data generated from the educational data control unit and providing a web distribution service; and the database storing the educational data generated from the educational data control unit and the web document generated from the web service, wherein the educational data control unit, the web service unit, and the database may be embodied as a recordable medium storing executable codes that are executed by and installed in the computer.

The educational data control unit may include an interface module enabling the educational data to be edited and outputted on a display of a computer, the interface module providing an interface screen; an image link module linking the image to the educational data and storing the educational data linked to the image; and an image searching module searching the educational data linked to the image from a database and outputting the educational data through the interface module;

The interface screen may include a tool window 1, a content link window 2, an image recognition window 3, a link image window 4, and a text input window 5 The image link module may extract an image region to be linked from the scanned image without respect to the direction by calibrating the upper, lower, left, and right directions of the image.

The educational data control unit may further include an electronic board module that implements an electronic board function through the interface module.

The web service unit may include a web data generation module converting the educational data into a web document and storing the converted web document in the database; and a web service module distributing the web document over the Internet.

The web service unit may include a WAP document conversion function for a WAP service.

Embodiments of the invention will be described in detail, by way of example, with reference to the following drawings, in which:
Figure 1 is a block diagram illustrating an image linkage tuition device according to an exemplary embodiment of the present invention;
Figure 2 is a constructional view of illustrating a system including an image linkage tuition device according to an exemplary embodiment of the present invention;
Figure 3 is a view illustrating an exemplary interface screen displayed on the computer screen included in the system shown in Figure 2;
Figure 4 is a view illustrating an educational data editing mode of the interface screen shown in Figure 3;
Figure 5 is a view illustrating an educational data tuition mode of the interface screen shown in Figure 3.

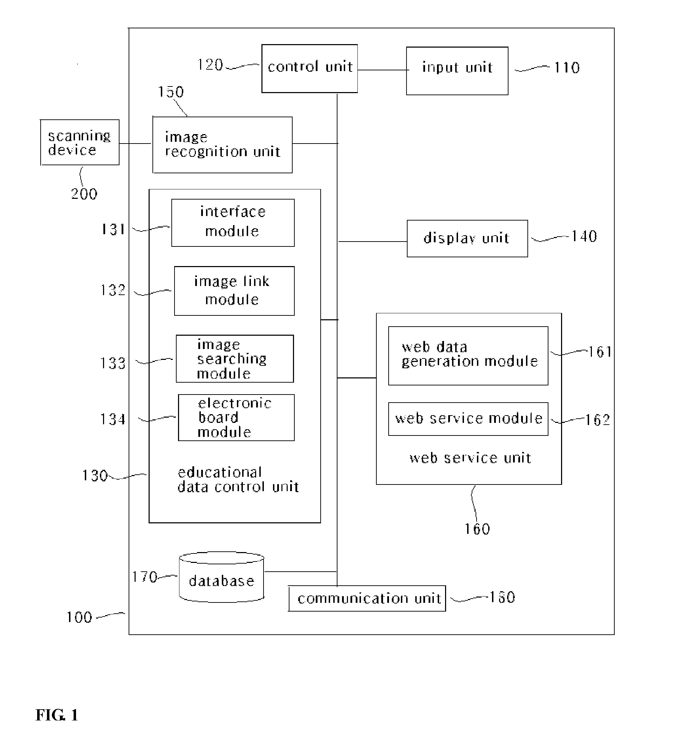

Figure 1 is a block diagram illustrating an image linkage tuition device according to an exemplary embodiment of the present invention.

Referring to Figure 1, the image linkage tuition device 100 includes an input unit 110, a control unit 120, a display unit 140, an image recognition unit 150, a communication unit 180, an educational data controller 130, a web service unit 160, and a database 170. The input unit 110 receives a control command from a user. The control unit 120 controls the image linkage tuition device 100 according to the control command 110 transmitted from the input unit 110. The display unit 140 outputs an image signal. The image recognition unit 150 is connected to a scanning device 200 to convert an image scanned from the scanning device 200 into an image data format that can be controlled by the computer. The communication unit 180 accesses the Internet and communicates with external input devices. The educational data control unit 130 displays the image scanned from the scanning device 200, links the image to educational data and stores the educational data linked to the image, and searches and outputs the educational data linked to the image. The web service unit 160 converts the educational data 130 generated from the educational data control unit 130 into a web document and distributes the web document over the Internet. The database 170 stores the educational data and web document generated from the educational data control unit 130 and the web service unit 160, respectively.

In the above configuration, the educational data control unit 130 generates, edits, and outputs the educational data. The educational data control unit 130 also displays an interface screen for performing an educational procedure and performs a web service on the generated educational data. The educational data control unit 130 includes an interface module 131, an image link module 132, an image searching module 133, and an electronic board module 134. The interface module 131 displays an interface screen on the display of the computer to edit and output the educational data. The image link module 132 links the image to the educational data and stores the educational data linked to the image. The image searching module 133 searches the educational data linked to the image from the database 170 and outputs the searched educational data through the interface module 131. The electronic board module 134 implements an electronic board on an interface screen output by the interface module 131.

The image link module 132 extracts an image region to be linked from the scanned image without respect to the direction by calibrating the upper, lower, left, and right directions of the image.

The web service unit 160 converts the educational data generated from the educational data control unit 130 into a web document and stores the converted web documents in the database 170 as well as performs a web service. The web service unit 160 includes a web data generating module 161 and a web service module 162. The web data generation module 161 converts the educational data into a web document and stores the converted web document in the database 170. The web service module 162 distributes the web document over the Internet. The web service unit 160 may further include a WAP document conversion function for a WAP service.

The image linkage tuition device 100 of the present invention may be configured to be mounted and operated in the computer.

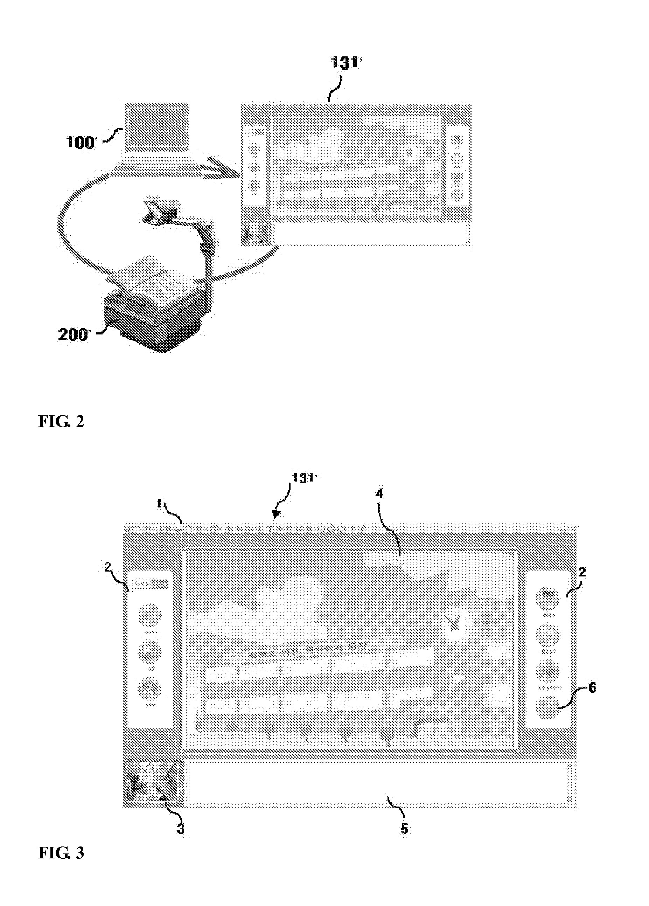

Figure 2 is a constructional view of illustrating a system including an image linkage tuition device according to an exemplary embodiment of the present invention. Referring to Figure 2, a computer 100' includes input unit 110, the control unit 120, the display unit 140, the image recognition unit 150, the communication unit 180, and a storage (not shown). The educational data control unit 130, the web service unit 160, and the database 170 are mounted in the computer 100'. The scanning device 200' is located outside the computer 100' to scan an image. The scanning device 200' is connected to the computer 100'.

The educational data control unit 130, the web service unit 160, and the database 170 may be embodied as a recordable medium storing executable codes that are executed by and installed in the computer.

In the image link tuition device described in Figures 1 and 2, a user may scan an image so that the image is displayed on an interface screen provided by the device, link the image to educational data to generating educational data, output the educational data for education, and convert the generated educational data into a web document for a web service.

Figure 3 is a view illustrating an exemplary interface screen displayed on the computer screen included in the system shown in Figure 2. The interface screen provided by the interface module 130 will be detailed with reference to Figure 3. Referring to Figure 3, the interface screen 131' provided by the interface module 131 includes a tool window 1, a content link window 2, an image recognition window 3, a link image window 4, and a text input window 5.

The tool window 1 permits a user to select a tuition mode, an editing mode, and a real imager mode, and use various functions, such as storing, magnifying image, moving, and setup. More specifically, the tool window 1 includes icons representing "help/scroll lock" (recognition stop), "end playing sound automatically/replay sound", "control and set up real imager mode", "invert camera image /tuition mode", "main link image rotation and resizing", "editing mode skin setup and indicating the number of linked contents", "storing editing mode project generation modification and activating working window", and "conversion between editing mode/tuition mode/real imager mode". The real imager mode enables a real image to be displayed on the link image window 4.

The content link window 2 enables an image to be linked to content corresponding to the image. The content link window 2 contains icons representing a sound, a picture, a document file such as an office file, a motion image, "Open folder" for searching for data, and a link homepage for accessing the home page. The content link window 2 further contains an Editing/Tuition icon for editing educational data and converting tuition modes located at the right and lower side of the window. A user may establish a link between an image and content corresponding to the image using the icons contained in the content link window 2.

The image recognition window 3 may output an image of a real object scanned from the scanning device such as camera and scanner, and enables a tutor to magnify or reduce the image, or select a part of the image by a region definition function. The image link module 132 extracts the part of the image selected by the tutor from the image displayed on the image recognition window 3. The extracted part of the image is adapted to recognize an image region corresponding to the educational data out of parts contained in the corresponding image without respect to top-to-down inversion or left-to-right inversion. Related image recognition technologies are well known to the public, and therefore, the detailed description will be omitted.

The link image window 4 displays the educational data corresponding to the image recognized by the image recognition window 3. The tutor may reinstall an image representing the educational data on the link image window 4. That is, a link activation image may be reinstalled. When the real imager mode is selected, the link image window 4 displays a real image generated by the scanning device 200.
The text input window 5 enables the tutor to enter some characters.

A user may edit image-embedded educational data (educational data) using the configurations shown in Figures 1 and 2, and the interface screen 131' shown in Figure 3. The user may also perform tuition with the edited educational data and through a real image input.

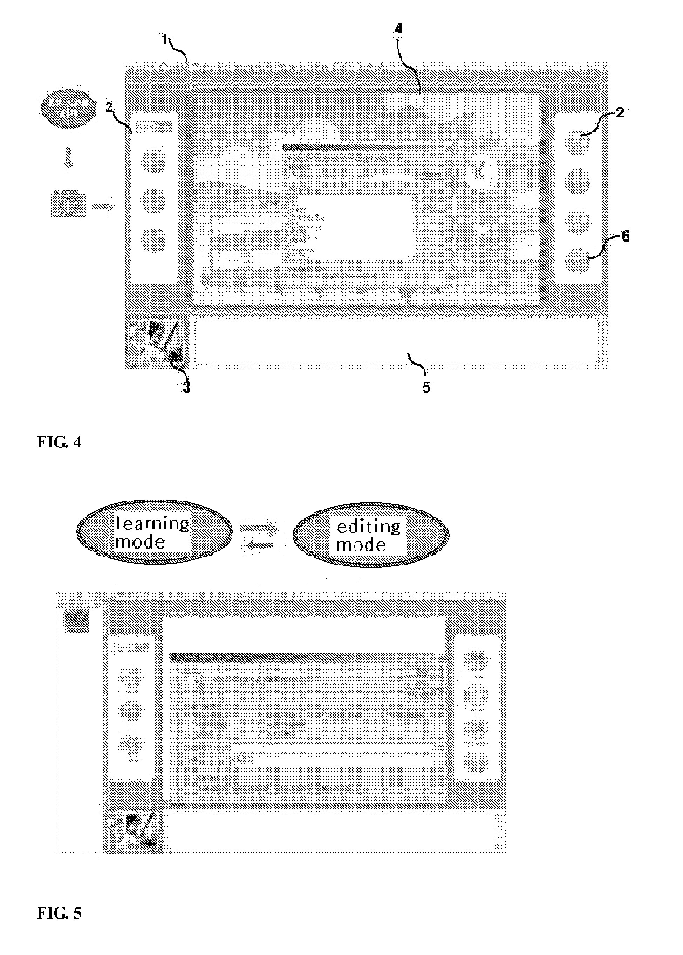

Figure 4 is a view illustrating an educational data editing mode of the interface screen shown in Figure 3, and Figure 5 is a view illustrating an educational data tuition mode of the interface screen shown in Figure 3.

A tutor selects an editing mode by clicking Editing/tuition mode icon 6 to create educational data, scans an image of the object to be studied using the scanning device, for example, camera shown in Figure 5, and displays the scanned image on the image recognition window 3. Then, when the tutor clicks a specific icon on the link selection window 2, a pop-up window pops up on the window to enable the tutor to select content to be linked to the image displayed on the image recognition window and store the selected content in the database 170. This procedure may enable the tutor to easily create educational data.

The tutor selects the tuition mode to start tuition, and scans an image of the object to be studied using the scanning device, for example, camera shown in Figure 5, and displays the scanned image on the image recognition window 3. Later, when the tutor selects the tuition mode, the educational data pops up on the link image window 4, which is linked to the part of the image out of the image displayed on the image recognition window 3. When the tutor selects the content to be studied from the educational data, the corresponding content is displayed on the link image window 4, so that the tutor may perform tuition using the displayed content.

The image linkage tuition device of the present invention described above has the following functions and features.

Two steps are required to perform a general tuition course: searching and executing the educational data stored in the computer. However, the present invention may provide an educational environment without any need of searching and executing of the educational data. Therefore users may focus only on the tuition course.

The related functions may include an image scanning function, a database generation function, a real imager function, and an electronic board function. The image scanning function scans an image of an object and stores the scanned image in the database. The database generation function links the scanned image to multimedia data corresponding to the scanned image, so that the multimedia data may be reproduced when the object is recognized by the device. The real imager function provides a real imager function using the image captured by the camera. The electronic board function enables a user to make a note or description on the image provided by the computer using a diversity of pens.

The present invention enables a broader range of applications since there is no certain limitations to objects to be recognized. The present invention enables a tutor to create his own educational data (educational data) by himself in contrast to the conventional educational devices.

The present invention may also provide a real-time searching function. For example, the present invention may analyze an image captured by the camera, and then immediately search and display the educational data, such as containing multimedia, linked to the image from the database.

In addition, the present invention may have features such as magnifying the image of the object, and improving recognition speed and recognition reliability.

Magnifying the image of the object may overcome the shortcoming of such a method as to recognize the object using RFIDs or barcodes, which is restrictive to objects to be recognized. For this purpose, the present invention employs an object recognition technology using a camera, which is basically based on human information recognition system. In particular, most of objects that can be identified by human eyes may be recognized by the present invention, since the present invention is based not on the letter recognition but on the image recognition.

The recognition speed improving technologies, for example, iris recognition technology or footprint recognition technology, conventionally required high-precision analyzing processes, and therefore, these technologies were difficult to apply in general fields in terms of processing time and costs. The image recognition teaching solution according to an exemplary embodiment of the present invention might considerably improve the recognition speed by abandoning high-precision recognition, and may provide a solution optimized for the field of education. In connection with the improvement in recognition reliability, the conventional footprint and iris recognition technologies are used only in the very restrictive environments, which makes it difficult for such technologies to apply to educational equipment that is used by a diversity of users in various environments.

Accordingly, the present invention considerably improved the recognition reliability by using an algorithm for minimizing lowering in recognition rate caused by changes in objects and environment, such as rotation, deformation, distance, illumination, color, etc.

The present invention may automatically convert the generated educational data into the web document, which may enable tuition to be performed over the Internet.

The present invention facilitates the combination of images and contents for education so that a user may easily create educational data using multimedia data. The present invention may select educational data to be studied by scanning an image of an object, so that visual tuition may be easily performed using multimedia data.

The present invention may enable a user to easily convert a generated educational data into a web document, so that educational data for the Internet may be easily created.

The foregoing embodiments and advantages are merely exemplary and are not to be construed as limiting the present invention. The present teaching can be readily applied to other types of apparatuses. The description of the foregoing embodiments is intended to be illustrative, and not to limit the scope of the claims. Many alternatives, modifications, and variations will be apparent to those skilled in the art.

### Reference Numerals

| | |
|---|---|
| 100: image linkage tuition device | 100': computer |
| 110: input unit | 120: control unit |
| 130: educational data control unit | 131: interface module |
| 131': interface screen | 1: tool window |
| 2: content link window | 3: image recognition window |
| 4: link image window | 5: text recognition window |
| 132: image link module | 133: image searching module |
| 134: electronic board module | 140: display unit |
| 150: image recognition unit | 160: web service unit |
| 161: web data generation module | 162: web service module |
| 170: database | 180: communication unit |
| 200: scanning device | 200': imaging device |

## Claims

1. An image linkage tuition device comprising:
an educational data control unit for displaying an image scanned from a scanning device, linking the image to educational data and storing the educational data linked to the image therein, and for searching and outputting the educational data linked to the image, the educational data control unit having an interface module for enabling the educational data to be edited and outputted on a display of a computer, the interface module for providing an interface screen, the interface screen including a tool window (1), a content link window (2), an image recognition window (3), a link image window (4), and a text input window (5),
an image link module for linking the image to the educational data and storing the educational data linked to the image, and
an image searching module for searching the educational data linked to the image from a database and outputting the educational data through the interface module;
a web service unit for converting the educational data generated from the educational data control unit and providing a web distribution service; and
the database for storing the educational data generated from the educational data control unit and the web document generated from the web service.
